# EUROPEAN PATENT APPLICATION

(11) **EP 3 620 921 A1**
(43) Date of publication of application: **11.03.2020**
(21) Application number: 18192838.3
(22) Date of filing: 05.09.2018
(51) Int. Cl.: G06F 9/54

(54) **COMPUTER-IMPLEMENTED METHOD, DATA PROCESSING APPARATUS, COMPUTER PROGRAM, AND DATA CARRIER SIGNAL**

(71) Applicant: Forcam GmbH, 88214 Ravensburg (DE)
(72) Inventor: Sinsel, Alexander, 88214 Ravensburg (DE)
(74) Representative: Meyer zu Bexten, Elmar

(57) **Abstract**

**Problem**

While the prior art comprises few service-oriented architectures (SOAs) that operate within some constraints imposed by the architectural style known as representational state transfer (REST), they cannot be considered "RESTful" in that clients and server interact through a fixed interface shared through documentation or an interface description language (IDL) that requires clients to be hard-coded with information regarding the structure or dynamics of the IloT web service provided.

**Solution**

Computer-implemented method of programmatically interfacing client applications with industrial resources such as manufacturing facilities, the method comprising uniquely identifying the resources, such as by means of uniform resource locators, uniformly accessing the resources, such as by means of a Hypertext Transfer Protocol, separating the resources from representations thereof, such as by means of a JavaScript Object Notation, and
transferring states of the resources by means of the representations,
characterized in that
the representations are strictly hypermedial such that each of the resources is attainable through hyperlinks from a single entry point.

## Description

### Technical Field

The invention relates to the process and products as per the first portion of the independent claims.

### Background Art

In the context of ambient intelligence and other emerging technologies, the term "industrial Internet of things" (IIoT) is often encountered in the manufacturing industries, referring to the industrial subset of the so-called Internet of things (IoT). IIoT helps companies create new business models, improve productivity, exploit analytics for innovation, and transform workforce. An overview of the development and standardizations of suitable connectivity solutions for enabling IIoT may be gathered from MUMTAZ, Shahid, et al. Massive Internet of Things for industrial applications: Addressing wireless IIoT connectivity challenges and ecosystem fragmentation. IEEE Industrial Electronics Magazine. 2017-03-21, vol.11, no.1, p.28-33.

EP 3291085 A (SIEMENS AG [DE]) 07.03.2018 provides a graphical data priority representation for the visualization and control of data processing in IIoT systems.

US 2018063666 A (IBM [US]) 01.03.2018 discloses a computer-implemented method, computerized apparatus, and computer program product for supporting parallel user interaction with physical and modeled system using the so-called Watson loT platform.

US 2017222999 A (GEN ELECTRIC [US]) 03.08.2017 provides a method, system, and program storage device for binding an industrial application to a plurality of services in the IIoT.

WO 2018/036708 A (BOSCH GMBH ROBERT [DE]) 01.03.2018 relates to a gateway for connecting a data source system to an IT system having real-time capable middleware and non-real-time capable middleware on a common operating system, wherein an application for communicating via a network protocol is executed on the non-real-time capable middleware and the non-real-time capable middleware comprises a framework, at least one hardware interface, via which the data source system can be connected to the real-time capable middleware, at least one hardware interface, via which the IT system can be connected to the non-real-time capable middleware, and a software interface, which is configured to allow communication between the real-time capable middleware and the non-real-time capable middleware, and wherein the gateway is configured to provide, via the framework, predefined software interfaces for individual components of the data source system, which components can be connected to the real-time capable middleware, or for components of the IT system.

### Summary of invention

The invention as claimed is hereinafter disclosed in such a way that the technical problem with which it deals can be appreciated and the solution can be understood.

### Technical Problem

While the prior art comprises few service-oriented architectures (SOAs) that operate within some constraints imposed by the architectural style known as representational state transfer (REST), they cannot be considered "RESTful" insofar as clients and server interact through a fixed interface shared through documentation or an interface description language (IDL), hence requiring clients to be hard-coded with information regarding the structure or dynamics of the IIoT web service provided.

Furthermore, state-of-the-art application programming interfaces (APIs) are essentially based on the notion of "things with properties", that is, arbitrary entities that must be instantiated by the application itself, specifying any pertinent properties, and time series related to those "things" that have an embedded processor, this representational subset of things sometimes referred to as "assets". When viewed from an application perspective, a corresponding platform provides only a semantically hollow framework that is of little help in modeling a complex industrial environment. Due to this lack of semantics, use of such platform is basically limited to predictive maintenance where, to derive prognoses for the maintenance intervals, a neural network can evaluate the recorded time series regarding patterns and regularities absent any knowledge of semantics.

### Solution to Problem

The problem is solved as per the second portion of Claim 1, that is, by leveraging hypermedia as the engine of application state (HATEOAS).

### Advantageous effect of invention

Having accessed an initial uniform resource identifier (URI) for a strictly RESTful method as per the invention, a REST client will be able to use server-provided links dynamically to discover all the available actions and resources it needs. As access proceeds, the server responds with text that includes hyperlinks to other actions that are currently available. The client thus needs little to no prior knowledge about how to interact with the server beyond a generic understanding of hypermedia. This decoupled architecture enables client and server functionality to evolve independently.

A peculiarity reflected in the subject matter of Claim 2 is the proposed call parameter "embed", allowing the caller of a resource to explicitly specify other resources to be embedded in the representation of the resource. Typically, these are sub-resources that can be embedded in the main resources. This allows for a "lean" definition of main resources, apportioning all their properties among thematically related sub-resources with increasing granularity. Hence, a main resource needs to contain only few properties that are required to identify itself and its condition. By specifying sub-resources through an invocation parameter of the form "embed={sub-resource1}&embed={sub-resource2}", a caller may request additional information to be output when the main resource is called. Because applications tend to embed only those sub-resources that are of interest to them, the resulting data transfer proves highly performant.

As per Claim 3, objects from the manufacturing domain represent the central resources in this context. Because the invention dictates the semantics of resources, semantic interoperability of its applications is guaranteed. Even more, the claimed method ensures the organizational interoperability of people, production facilities, and IT systems of any production plant, maximizing both resource effectiveness and process efficiency. Semantic interoperability is a prerequisite for this organizational interoperability of all people and IT systems involved with a given process. Herein, semantic interoperability among applications is achieved by the semantics established by the platform, whereas semantic interoperability between applications and people is achieved by matching the specified semantics with the terminology used in production.

To ensure the organizational interoperability of people and IT systems, the proposed API allows only few actions - individually accessible through POST, PUT and DELETE methods -, each of which implements a dedicated functionality. Not only is it thus clearly defined which actions are available to client applications, but furthermore are individual actions strictly decoupled from each other. Because of this architectural approach, an application that implements some specific functionality requires no knowledge of related applications to work correctly. This way, applications as diverse as detailed production scheduling, manpower planning, dynamic scheduling, predictive rescheduling, predictive maintenance, predictive quality assurance, or tool management may be developed and operated independently, a sole prerequisite being their ability to respond to a highly specific set of events.

As laid out in Claim 4, such event can be posted by call-back to a webserver indicated by the third-party application to which it pertains, warranting transparency of the complex internal platform workflows to ensure organizational interoperability of all systems. Alternatively, referring to Claim 5, applications may choose to register for events through a Message Queuing Telemetry Transport (MQTT) broker provided for this purpose. Eliminating the need for a dedicated HTTP server on the side of the application, the latter will then be notified about any events via MQTT. This option proves especially advantageous for smartphone apps and other lightweight applications on mobile devices.

Using any of these two mechanisms, applications can subscribe not only to conventional events, which may be considered internal to the resources and thus require knowledge of the complex domain-specific workflow, but also to advanced events as per Claim 6. These application-specific events relieve third-party developers of complex technical considerations, allowing them to focus on their own workflow in a single specific event that is generated by the platform.

### Brief description of drawings

Figure 1 is a knowledge graph used in the invention.

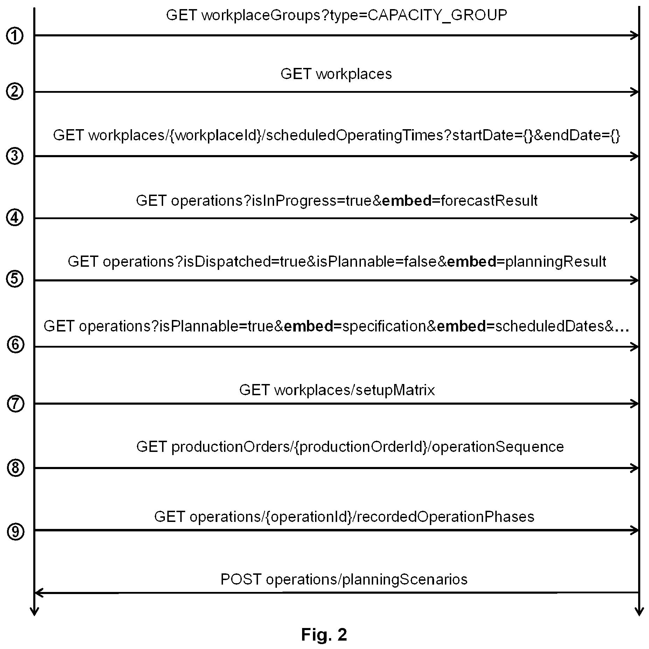

Figure 2 is an event scenario used in the invention.

### Description of embodiments

Improving upon state-of-the-art analytics and forecasting, an embodiment of the invention may be considered an operating system for the so-called " smart factory", its application-level interface to the underlying machines being comparable to the application binary interface offered by a conventional operating system.

Forecasts for individual operations constitute the central control entity (" single source of truth") of this IIoT platform. Consequently, a method as per the invention ensures the organizational interoperability of people, production facilities, and IT systems of a production plant by ensuring that any system involved in production, including those unknown to the platform itself, are geared to such forecast. Additional stakeholders include production staff, material and tool logistics, driverless transport, or warehouse management systems. All third-party systems are consistently informed each time the forecast has changed.

To ensure this organizational interoperability, the proposed API enforces a specific interaction model. That model is designed such that all applications, whether included with the platform or provided by third-party vendors, whose actions (POST, PUT, or DELETE) affect the forecast are orchestrated as outlined below. No application needs to be aware of the other applications.

Any application that contributes to the update of the forecast is run in regular time intervals, further being triggered by a single event specific to the application. Vice versa, any such application will itself generate one or more internal events based on which the platform determines which application-specific events are to be generated in which order.

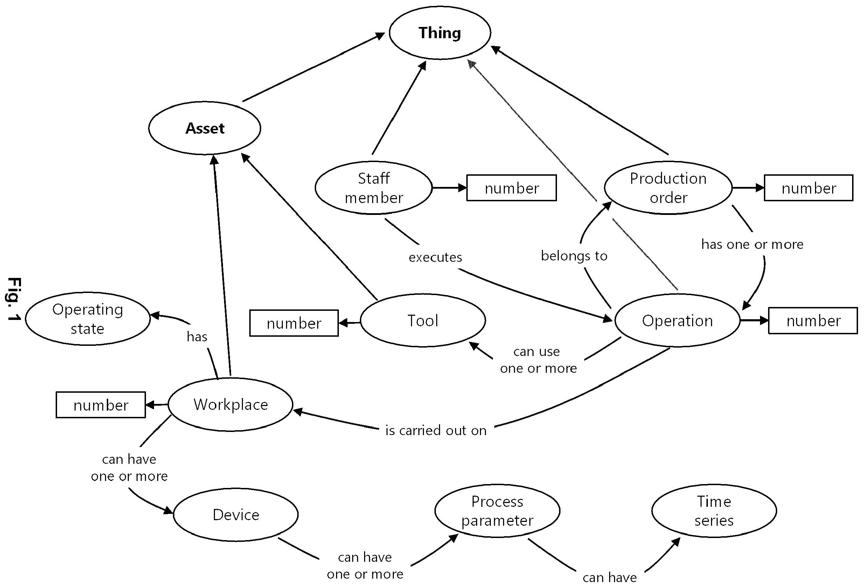

Figure 1 schematically depicts an ontology of resources upon which this API is based. With implementation details hidden behind that interface, applications are agnostic with respect to the resources on which they operate. As an example, consider the method "GET workplaces/{id}/personnelRequirements", which provides information about the number of employees with a given skill or qualification required at the workplace shifts. Personnel requirements can be independent of or dependent on detailed order scheduling. In the latter case, the required skills can also depend on the material to be produced by an operation. Application developers do not have to consider how the platform determines the personnel requirements; instead, they receive the individual time intervals in which the requirements exist. Suitable time intervals include the entire workplace shift or partial intervals thereof.

As may be gathered from the above specification, said interface consistently provides personnel requirements in the same simple format. These requirements are determined by the platform and may in fact be quite complex. For instance, the operation of an injection molding machine used to capacity would require one injection molder per shift. In this case, the detailed scheduling of orders would be irrelevant to the determination of requirements. However, if the operating company wanted to determine the current utilization based on such detailed scheduling, sometimes an average of 0.5 injection molders per shift could suffice. A determination of requirements to the second might yield, for instance, the demand for an injection molder throughout the first half of the shift. In the case of a manual work station, even the required qualification may depend on the material produced. In this case, demand determination must always be based on detailed planning. Preferably, the precise forecast derived as per the invention is used to determine requirements. Where this is not available, the proposed method resorts to the original plan.

### Industrial applicability

The invention is applicable, inter alia, throughout the automotive, aerospace and defense, oil and gas, and medical device manufacturing industries.

### Reference signs list

1 Load all capacity groups
2 Load all workplaces
3 Load the scheduled operating times of the workplaces during the planning period
4 Load the forecast for those operations currently in progress
5 Load the planned dates of the fixedly planned operations
6 Load the planning-relevant data of all plannable operations (where different processing variants are defined, load those also)
7 Load the setup matrix
8 Load the operation sequences of the relevant production orders
9 If any, load subsequent plannable operations in the sequence whose completion dates are yet unknown

### Citation list

The following documents are cited hereinbefore.

### Patent literature

EP 3291085 A (SIEMENS AG [DE]) 07.03.2018
US 2018063666 A (IBM [US]) 01.03.2018
US 2017222999 A (GEN ELECTRIC [US]) 03.08.2017
WO 2018/036708 A (BOSCH GMBH ROBERT [DE]) 01.03.2018

### Non-patent literature

MUMTAZ, Shahid, et al. Massive Internet of Things for industrial applications: Addressing wireless IIoT connectivity challenges and ecosystem fragmentation. IEEE Industrial Electronics Magazine. 2017-03-21, vol.11, no.1, p.28-33.

## Claims

1. Computer-implemented method of programmatically interfacing client applications with industrial resources such as manufacturing facilities, the method comprising
uniquely identifying the resources, such as by means of uniform resource locators,
uniformly accessing the resources, such as by means of a Hypertext Transfer Protocol,
separating the resources from representations thereof, such as by means of a JavaScript Object Notation, and
transferring states of the resources by means of the representations, **characterized in that**
the representations are strictly hypermedial such that each of the resources is attainable through hyperlinks from a single entry point.

2. Method as per Claim 1 wherein,
upon invoking the resources, a caller may specify other resources, such as sub-resources, to be embedded into the representations of the resources invoked.

3. Method as per Claim 1 or Claim 2 wherein
the resources comprise operations, production orders, staff members, and assets having an embedded processor, such as workplaces or tools.

4. Method as per any of the preceding claims wherein,
upon request by the applications, events pertinent to the resources are posted via call-backs to an indicated webserver.

5. Method as per any of Claim 1 through Claim 3 wherein,
upon request by the applications, events pertinent to the resources are notified via a publish-subscribe-based messaging protocol such as Message Queuing Telemetry Transport.

6. Method as per Claim 4 or Claim 5 wherein
the events are specific to the applications.

7. Data processing apparatus having means for carrying out the method of any of the preceding claims.

8. Computer program adapted to perform the method of any of Claim 1 through Claim 6.

9. Data carrier signal carrying the program of Claim 8.
